## Europäisches Patentamt
## European Patent Office
## Office européen des brevets

(19)

(11) Numéro de publication : **0 113 486**
**B1**

(12)

# FASCICULE DE BREVET EUROPÉEN

(45) Date de publication du fascicule du brevet :
**28.06.89**

(21) Numéro de dépôt : **83201688.5**

(22) Date de dépôt : **29.11.83**

(51) Int. Cl.⁴ : **B 28 C 5/38**, B 28 C 7/04,
B 28 C 7/12, G 01 F 11/02,
B 01 F 15/04

(54) Doseuse.

(30) Priorité : **02.12.82 BE 895216**

(43) Date de publication de la demande :
**18.07.84 Bulletin 84/29**

(45) Mention de la délivrance du brevet :
**28.06.89 Bulletin 89/26**

(84) Etats contractants désignés :
**AT CH DE FR GB IT LI LU NL SE**

(56) Documents cités :
**BE--A-- 895 216**
**FR--A-- 2 168 542**
**FR--A-- 2 194 473**
**FR--A-- 2 246 169**
**FR--A-- 2 389 404**
**US--A-- 3 926 345**

(73) Titulaire : **Neuckens, François**
**Mechelsesteenweg 163**
**B-2580 Sint-Katelijne-Waver (BE)**

(72) Inventeur : **Neuckens, François**
**Mechelsesteenweg 163**
**B-2580 Sint-Katelijne-Waver (BE)**

(74) Mandataire : **Donné, Eddy**
**M.F.J.Bockstael Arenbergstraat 13**
**B-2000 Anvers (BE)**

## Description

La présente invention a trait à un dispositif de dosage ou doseuse, à savoir, en particulier, à un dispositif servant à assurer, lors de la préparation d'un mortier-mousse, tel qu'un mortier dit cellulaire, qu'une quantité déterminée de mousse, proportionnelle à la quantité de mortier proprement dit, est introduite dans le malaxeur de mortier.

Des installations pour doser et mélanger des liquides, utilisant plusieurs cylindres doseurs séparés sont connues des documents US 3 926 345 et FR 2 168 542. Du fait que les cylindres se trouvent séparés, lesdites installations présentent l'inconvénient d'être peu compactes et de nécessiter un dispositif de commande complexe.

L'objet principal de l'invention est la réalisation d'une doseuse, qui se prête, de manière automatique et des plus simples et efficaces, au dosage spécifié ci-dessus, et cela de manière que les quantités requises de liquide moussant, d'eau et d'air, débitées par la doseuse selon l'invention, sont introduites dans un dispositif connu en soi, où le mélange de liquide moussant, d'eau et d'air est transformé en mousse, qui est ensuite introduite dans ledit malaxeur.

A cet effet l'invention est relative à une doseuse pour le dosage simultané d'eau, d'air et de liquide moussant dans une proportion bien déterminée, comprenant des pistons de diamètres différents délimitant ensemble des chambres dans un corps cylindrique, dont le volume de chaque chambre correspond à la quantité d'un fluide déterminé à doser ; un dispositif de commande qui commande le coulissage en bloc des pistons susmentionnés en agissant sur une tige prolongée en dehors du corps cylindrique ; et une canalisation d'alimentation et de refoulement desdits fluides, caractérisé en ce que la doseuse comprend au moins deux pistons montés coaxialement, dans le même corps cylindrique, qu'ils délimitent au moins trois chambres et qu'ils ont une tige unique assurant la même course à tous les pistons.

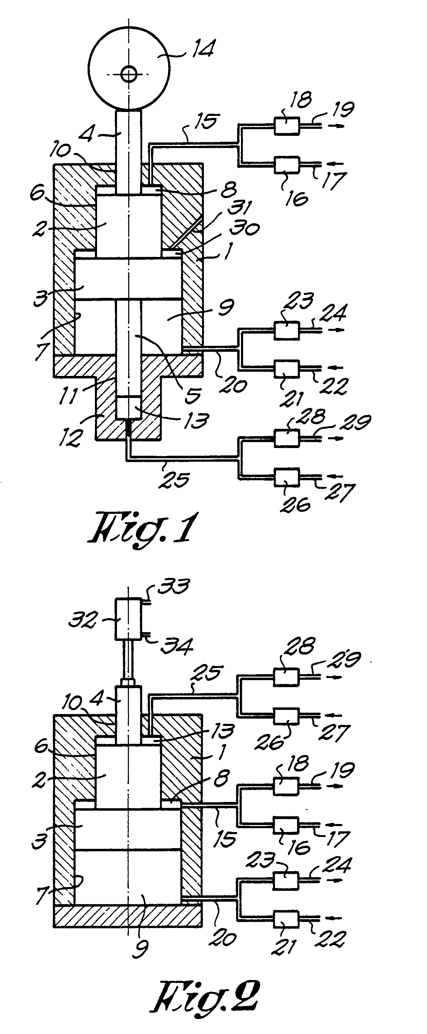

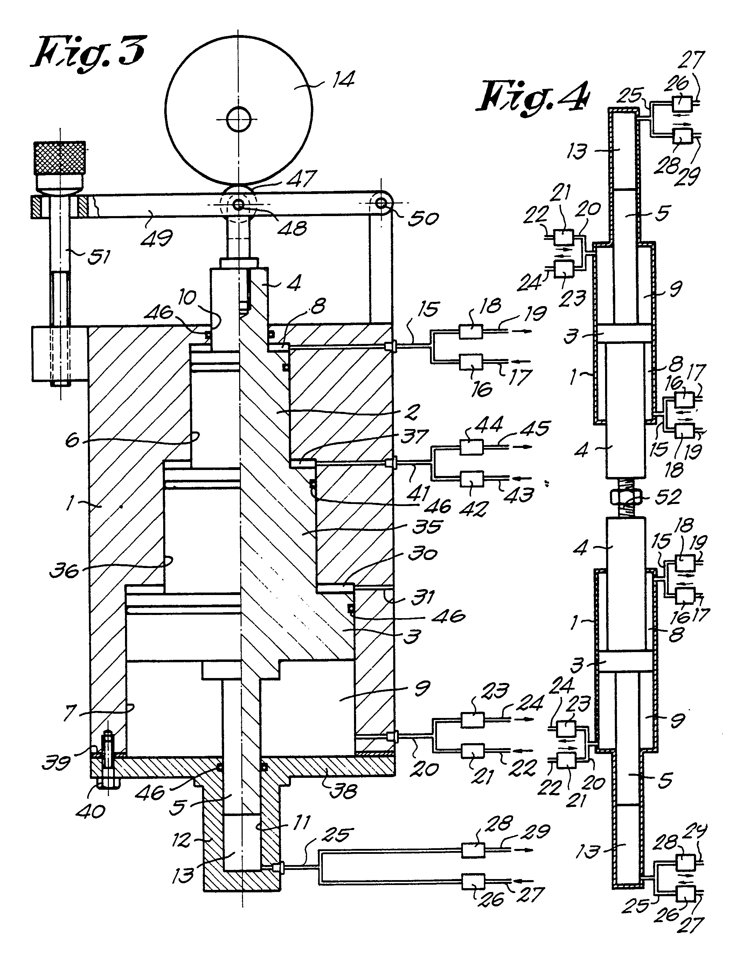

Les caractéristiques et avantages de l'invention ressortiront plus clairement de la description détaillée suivante de quelques modes de mise en œuvre préférés, décrits à titre d'exemples sans la moindre intention restrictive par rapport à la teneur des revendications avec référence aux dessins annexés, où la figure 1 représente en coupe verticale schématique un mode d'exécution de la doseuse selon l'invention ; les figures 2 et 3 représentent de manière schématique des variantes du mode d'exécution illustré par la figure 1 ; et la figure 4 représente une doseuse à double effet selon l'invention.

Comme on le voit en se reportant à la figure 1, qui représente un mode de mise en œuvre des plus simples, le dispositif de dosage selon l'invention se compose essentiellement d'un corps 1 contenant, de manière appropriée, deux pistons combinés 2-3, portant de part et d'autre une tige de piston, respectivement 4 et 5. Les pistons 2 et 3 coulissent en des alésages, respectivement 8 et 9, tandis que les tiges de piston et/ou tiges de guidage 4 et 5 coulissent en des passages, respectivement 10 et 11, du corps cylindrique 1, dont, en l'occurrence, la paroi inférieure est, au niveau de la tige de piston 5, munie d'un prolongement en forme de dôme 12 formant une chambre 13.

Une came 14 ou un autre dispositif de commande analogue coopère, suivant une des caractéristiques de l'invention, avec la tige de piston 4 en vue de la commande des pistons 2 et 3.

La chambre 8 se trouve en communication par une conduite 15, d'une part, avec une conduite d'amenée d'eau 17 par l'entremise d'une soupape de non-retour 16 et, d'autre part, avec une conduite d'évacuation d'eau 19 par l'entremise d'une soupape de non-retour 18. La chambre 9 communique par une conduite 20, d'une part, avec une conduite d'amenée d'air 22 par l'entremise d'une soupape 21 et, d'autre part, avec une conduite d'évacuation d'air 24 par l'entremise d'une soupape 23, tandis que la chambre 13 communique par une conduite 25, d'une part, avec une conduite d'amenée de liquide moussant 27 par l'entremise d'une soupape de non-retour 26 et, d'autre part, avec une conduite d'évacuation de liquide moussant 29 par l'entremise d'une soupape à surpression 28.

Enfin, l'espace 30, délimité par la face supérieure du piston 3 et la paroi supérieure de l'alésage 7, est, en l'occurrence, mis en communication avec l'atmosphère extérieure par une conduite 31.

Le fonctionnement du dispositif décrit dans les lignes précédentes est des plus simples.

En effet, il suffit de calculer le volume des chambres 8, 9 et 13 de manière que le déplacement du piston commandé par ladite came 14, se prête à l'amenée dans l'appareil de quantités déterminées d'eau, d'air et de liquide moussant et à l'évacuation de quantités déterminées d'eau, d'air et de liquide moussant, par coup, le retour de ces fluides vers les conduites d'amenée 17, 22 et 27 étant évité par les soupapes de non-retour 16 et 26 et la soupape 21, de manière à assurer leur introduction dans un dispositif de moussage par les conduites 19, 24 et 29 et la soupape de non-retour 18, la soupape 23 et la soupape à surpression 28, soupapes 18, 23 et 28 qui servent à empêcher à coup sûr tout retour vers les chambres 8, 9 et 13 des liquides et de l'air ainsi évacués.

Dans ce mode de mise en œuvre du système selon l'invention, l'air introduit dans la chambre 9 sous une pression bien déterminée, sert également à titre de fonction supplémentaire, à assurer le mouvement ascendant du système.

La figure 2 représente un mode d'exécution dans lequel les pistons 2 et 3 sont fixés à la tige de piston 4 d'un cylindre pneumatique 32, muni de conduites d'entrée et de sortie 33-34 et commandé de manière appropriée pour remplacer aussi bien la commande réalisée par l'amenée d'air par la conduite 20 que celle effectuée au moyen d'une came ou d'un autre dispositif mécanique analogue.

Dans ce cas, l'espace 9 situé sous le piston 3 communique par une conduite 20 avec une conduite d'amenée d'air 22 et une conduite d'évacuation d'air 24, tandis que les espaces 13 et 8 situés au-dessus des pistons 2 et 3 sont reliés par des conduites 25 et 15 à des dispositifs d'amenée et d'évacuation respectivement pour le liquide moussant et l'eau.

La figure 3 représente une installation basée sur la mise en œuvre d'un dispositif du genre illustré par la figure 1, dont le corps cylindrique 1 contient un piston composé de trois parties séparées à diamètres échelonnés, respectivement 2, 35 et 3, dont les extrémités portent les tiges de piston 4 et 5, qui, comme dans l'exemple précédent, coulissent en des alésages, respectivement 10 et 11, tandis que les pistons 2, 35 et 3 coulissent en des alésages, respectivement 6, 36 et 7, en vue de la formation de chambres 8, 37 et 9.

Le fond de l'appareil, qui, dans le présent mode d'exécution, se présente sous forme d'un couvercle 38, fixé au corps 1, par des vis 40 avec entremise d'un dispositif d'étanchéité, est muni d'un dôme 12 contenant une chambre 13.

Comme dans l'exemple illustré par la figure 1, les chambres 8, 9 et 13 se trouvent en communication par les conduites 15, 20 et 25 avec des conduites d'évacuation par l'entremise de soupapes de non-retour et de soupapes, munies des mêmes chiffres de référence que celles du dispositif représenté par la figure 1. L'espace 30, situé au-dessus du piston 3, se trouve également en communication avec l'atmosphère par une conduite 31.

Dans ce mode d'exécution, l'espace 37 est mis en communication par une conduite 41 et une soupape 42 avec la conduite d'amenée d'air comprimé 43, conduite 41 qui est également connectée par l'entremise d'une soupape 44 à une conduite 45 pour l'évacuation de cet air comprimé.

Les parties mobiles de l'appareil sont munies de joints toriques, dont le nombre est au moins égal à celui de ces parties.

Selon le présent mode d'exécution de l'invention, la tige de piston 4 porte en haut un galet fou 47, qui coopère avec la came 14 et dont l'axe 48 est solidaire d'un levier 49, d'une part, articulé au corps 1 du dispositif au moyen d'un pivot 50 et, d'autre part, à position réglable avec une vis de réglage 51 pour régler, d'une part, la course des pistons 2, 15 et 3 et d'autre part, celle de la tige de piston 5 en vue du réglage de la quantité de mousse formée par cycle du dispositif.

Le fonctionnement du dispositif illustré par la figure 3 correspond à peu près à celui du dispositif décrit avec référence à la figure 1, à part le fait que l'air comprimé amené vers la chambre 37 assure le réglage de la pression exercée par le galet 47 sur la came 14 pendant la course ascendante commandée par la pression régnant dans la chambre 9, pour réduire autant que possible la sollicitation de la came 14.

Il est évident que cette chambre 37 n'est pas indispensable, mais peut être employée en combinaison avec la chambre 9 pour régler et modifier la charge par laquelle est sollicitée la came 14. On voit facilement que ce résultat s'obtiendrait également en ne prévoyant que les pistons 2 et 3 et en employant la chambre 30 uniquement pour l'amenée d'air comprimé.

La figure 4 représente un mode d'exécution d'un dispositif de dosage à double effet selon l'invention. Ce dispositif se compose de deux dispositifs du genre précédemment décrit montés coaxialement en série, dont les tiges de piston 4 sont accouplées par une tige de réglage 52 en vue du réglage du débit.

Bien que les caractéristiques et le fonctionnement soient les mêmes que ceux du mode d'exécution précédemment décrit, le présent mode d'exécution se distingue par le fait que l'amenée d'air sert également à la commande du dispositif de dosage grâce à une conception appropriée de sa commande.

Il va sans dire qu'on s'efforcera de faire, au préalable, un choix optimal des proportions volumétriques entre les différentes chambres.

Par suite les différences de concentration inévitables entre les liquides moussants de différentes provenances, il y a lieu de prévoir un système de réglage supplémentaire, assurant l'amenée à ladite chambre 13 de liquide moussant dilué ou non avec une dose appropriée d'eau pour réaliser ainsi au préalable un réglage judicieux en fonction du rapport volumétrique entre les chambres 8 et 13.

La pression de l'air comprimé amené vers la doseuse selon l'invention devra être soigneusement réglée par exemple à l'aide d'un régulateur de pression ordinaire, dans le but d'assurer un moussage efficace, dûment réglé.

On voit de ce qui précède que la mise en œuvre du système selon l'invention donne un appareil aussi simple qu'efficace, d'un prix de revient relativement bas et d'une grande fiabilité, et se distinguant par une grande précision de dosage.

Bien que dans les exemples illustrés par les figures 1 et 3 soit prévue une commande mécanique, d'une part, et pneumatique, d'autre part, il va sans dire que la commande de la doseuse selon l'invention pourra également être soit intégralement de nature pneumatique, à la manière décrite par exemple pour le mode d'exécution illustré par la figure 2, soit intégralement mécanique, par exemple sous forme d'une commande positive à came.

Il va de soi que l'invention ne se limite pas aux exemples d'exécution décrits dans les lignes précédentes et illustrés par les figures annexées, mais en prévoit toutes sortes de modifications, d'additions et d'adaptations en ce qui concerne les formes et dimensions, évidemment à condition de ne pas dépasser son cadre défini par la teneur des revendications formulées ci-après.

**Revendications**

1. Doseuse pour le dosage simultané d'eau, d'air et de liquide moussant dans une proportion bien déterminée, comprenant des pistons (2, 3) de diamètres différents délimitant ensemble des chambres (8, 9, 13) dans un corps cylindrique (1), dont le volume de chaque chambre (8, 9, 13) correspond à la quantité d'un fluide déterminé à doser ; un dispositif de commande qui commande le coulissage en bloc des pistons (2, 3) susmentionnés en agissant sur une tige (4) prolongée en dehors du corps cylindrique (1) ; et une canalisation d'alimentation et de refoulement (17, 19, 22, 24, 27, 29) desdits fluides, caractérisé en ce que la doseuse comprend au moins deux pistons (2, 3) montés coaxialement, dans le même corps cylindrique, qu'ils délimitent au moins trois chambres et que les pistons (2, 3) ont une tige (4) unique assurant la même course à tous les pistons (2, 3).

2. Doseuse selon la revendication 1, caractérisé en ce qu'elle est munie de trois pistons (2, 3, 5) qui forment un tout, dont le premier piston (2) délimite au niveau de son extrémité supérieure une chambre (8), destinée par exemple au dosage de l'eau, le deuxième piston (3), dont le diamètre est plus grand que celui du premier piston, délimite en haut une chambre (30), qui se trouve de préférence en communication avec l'atmosphère, et en bas une chambre (9), destinée par exemple au dosage de l'air, et le troisième piston (5), dont le diamètre est sensiblement plus petit que celui du premier piston (2) et qui est exécuté sous forme de tige de piston ou de tige de guidage (5), délimité au niveau de son extrémité libre une chambre (13) destinée par exemple au dosage du liquide moussant.

3. Doseuse selon la revendication 2, caractérisée en ce que ladite chambre (30), située au-dessus de la deuxième chambre (3), se trouve en communication avec une conduite d'amenée, respectivement d'évacuation d'air.

4. Doseuse selon la revendication 1, caractérisée en ce qu'elle est munie de quatre pistons (2, 35, 3, 5) qui forment un tout, dont le premier piston (2) délimite au niveau de son extrémité supérieure une chambre (8), destinée par exemple au dosage de l'eau, la deuxième chambre (35), dont le diamètre est plus grand que celui du premier piston, délimite en haut une chambre (37), à laquelle est raccordée une conduite d'amenée d'air, respectivement d'évacuation d'air, la troisième chambre (3), dont le diamètre est plus grand que celui du deuxième piston, délimite en haut une chambre (30), qui se trouve de préférence en communication avec l'atmosphère, et en bas une chambre (9), destinée par exemple au dosage de l'air, et le quatrième piston (5), dont le diamètre est sensiblement plus petit que celui du premier piston (2) et qui est exécuté sous forme de tige de piston ou de tige de guidage, délimite au niveau de son extrémité inférieure une chambre (13) destinée par exemple au dosage du liquide moussant.

5. Doseuse selon la revendication 1, caractérisée en ce qu'elle est munie de deux pistons (3, 5), dont le premier piston (3) délimite au niveau de son extrémité supérieure une chambre (8), destinée par exemple au dosage de l'eau, et au niveau de son extrémité inférieure une chambre (9), destiné par exemple au dosage de l'air, et le deuxième piston (3), dont le diamètre est sensiblement plus petit que celui du premier piston (3) et qui est exécuté sous forme de tige de piston ou de tige de guidage (5), délimite au niveau de son extrémité libre une chambre (13) destinée par exemple au dosage du liquide moussant.

6. Doseuse selon la revendication 1, caractérisée en ce que deux dispositifs sont mutuellement accouplés au moyen des tiges de piston (4) et d'une tige de réglage (52).

7. Doseuse selon l'une ou l'autre des revendications précédentes, caractérisée en ce que la chambre (8), à entrée et à sortie d'eau, se trouve en communication par l'entremise d'une soupape de non-retour (16) avec une conduite d'amenée d'eau (17) et, par l'entremise d'une deuxième soupape de non-retour (18), avec une conduite d'évacuation d'eau (19).

8. Doseuse selon l'une ou l'autre des revendications précédentes, caractérisée en ce que la chambre (9), pour le dosage de l'air, est munie d'une conduite d'amenée (22) et d'une conduite d'évacuation (24), munies toutes les deux d'une soupape (23, 24).

9. Doseuse selon l'une ou l'autre des revendications précédentes, caractérisée en ce que la chambre (13), pour le dosage du liquide moussant, est pourvue d'une conduite d'amenée (27), munie d'une soupape de non-retour (26), et d'une conduite d'évacuation (29), munie d'une soupape à surpression (28).

10. Doseuse selon la revendication 1, caractérisée en ce que le dispositif de commande se présente sous forme d'une came (14).

11. Doseuse selon la revendication 1, caractérisée en ce que le dispositif de commande se présente sous forme d'un cylindre pneumatique (32).

12. Doseuse selon la revendication 10, caractérisée en ce que ladite came (14) coopère avec un galet (47) monté sur le bout libre des susdits pistons, dont l'axe de rotation (48) est solidaire d'un levier (49), qui, d'une part, est articulé au corps cylindrique (1) et, d'autre part, peut être déplacé au moyen d'une vis de réglage (51).

13. Doseuse selon la revendication 10, caractérisée en ce que ladite came (14) présente une gorge, avec laquelle coopère un galet (47) monté sur le bout libre des susdits pistons.

**Claims**

1. Gauging device for the simultaneous gauging of water, air and foaming fluid in a well defined proportion, consisting in pistons (2-3) of different diameters jointly delimiting chambers (8-9-13) in a cylindrical body (1), in which the volume of each chamber (8-9-13) corresponds with the quantity of a defined fluid to be gauged ; a control device which controls the joint sliding of aforementioned pistons (2-3) by acting on a rod (4) protruding from the cylindrical body (1) ; and in a supply and a draining piping system (17-19-22-24-27-29) of said fluids, characterized in that the gauging device consists in at least two pistons (2-3), installed coaxially, in the same cylindrical body, that they mark delimit three chambers at least and that the pistons (2-3) possess a single rod (4) sensuring the same stroke to all pistons (2-3).

2. Gauging device according to claim 1, characterized in that it is equipped with three pistons (2-3-5) forming a whole, in which the first piston (2) delimits, at the level of it's upper extremity, a chamber (8), e. g. intended for the gauging of water, the second piston (3), whose diameter is larger than that of the first piston, delimiting a chamber (30) on top, which preferably is connected with the atmosphere, and at the bottom a chamber (9),· e. g. intended for the gauging of air, and a third piston (5), whose diameter is substantially smaller than that of the first piston (2) and which is designed in the form of a piston rod or of a guide rod (5), delimiting, at the level of it's free extremity, a chamber (13), e. g. intended for the gauging of the foaming fluid.

3. Gauging device according to claim 2, characterized in that said chamber (30), located above the second chamber (3), is connected with an air supply, respectively exhaust, pipe.

4. Gauging device according to claim 1, characterized in that it is equipped with four pistons (2-35-3-5) which form an assembly, in which the first piston (2) delimits at the level of it's upper extremity a chamber (8), e. g. intended for the gauging of water, the second chamber (35), whose diameter is larger than that of the first piston, delimiting on top a chamber (37), to which an air intake, respectively exhaust, pipe is connected, the third chamber (3), whose diameter is larger than the second piston, marking on top the boundaries of a chamber (30), which preferably is connected with the atmosphere, and at the bottom a chamber (9), e. g. intended for air gauging, and the fourth piston (5), whose diameter is substantially smaller than that of the first piston (2) and which is designed in the form of a piston rod or guiding rod, delimiting at the level of it's lower extremity a chamber (13) e. g. intended for the gauging of the foaming fluid.

5. Gauging device according to claim 1, characterized in that it is equipped with two pistons (3-5) of which the first piston (3) delimits at it's upper extremity a chamber (8), e. g. intended for the gauging of water, and at the level of it's lower extremity a chamber (9) e. g. intended for the gauging of air, and the second piston (3), whose diameter is substantially smaller than that of the first piston (3) and which is designed in the form of a piston rod or guiding rod (5), delimiting at the level of it's free extremity a chamber (13), e. g. intended for the gauging of the foaming fluid.

6. Gauging device according to claim 1, characterized in that two devices are mutually linked by means of piston rods (4) and of an adjusting rod (52).

7. Gauging device according to one of the aforementioned claims, characterized in that the chamber (8), for water intake and drainage, communicates by means of a non-return valve (16) with a water supply pipe (17) and, by means of a second non-return valve (18), with a water drainage pipe (19).

8. Gauging device according to one of the aforementioned claims, characterized in that said chamber (9), for air gauging, is equipped with a supply (22) and an exhaust (24) pipe, both equipped with a valve (23-24).

9. Gauging device according to one of the aforementioned claims, characterized in that the chamber (13), for the gauging of the foaming fluid, is equipped with a supply pipe (27), equipped with a non-return valve (26), and a drainage pipe (29), equipped with a booster valve (28).

10. Gauging device according to claim 1, characterized in that the control device is in the form of a cam (14).

11. Gauging device according to claim 1, characterized in that the control device is in the form of a pneumatic cylinder (32).

12. Gauging device according to claim 10, characterized in that said cam (14) cooperates with an idling roller (47) installed on the free end of the aforementioned pistons, whose revolving shaft (48) is linked to a lever (49), which, on the one hand, is articulated to the cylindrical body (1) and, on the other hand, can be moved by means of a set screw (51).

13. Gauging device according to claim 10, characterized in that said cam (14) shows a notch, with which an idling roller (47) installed on the free end of the aforementioned pistons cooperates.

**Patentansprüche**

1. Dosiereinrichtung zum gleichzeitigen Dosieren von Wasser, Luft und schäumender Flüssigkeit in einem wohlbestimmten Verhältnis, welche Kolben (2, 3) mit unterschiedlichem Durchmesser enthält, welche zusammen in einem zylindrischen Körper (1) Kammern (8, 9, 13) abgrenzen, deren jeweiliges Volumen der zu dosierenden Menge einer bestimmten Flüssigkeit entspricht ; eine Regeleinrichtung, welche die Verschiebung der obenerwähnten Kolben (2, 3) im ganzen durch Einwirkung auf eine außerhalb des zylindrischen Körpers (1) verlängerte Stange (4) befiehlt ; und eine Zufuhr- und Druckleitung (17, 19, 22, 24, 27, 29) für diese Flüssigkeiten, dadurch gekennzeichnet, daß die Dosiervorrichtung mindestens zwei im selben zylindrischen Körper koaxial montierte Kolben (2, 3) enthält, daß sie mindestens drei Kammern abgrenzt, und daß die Kolben (2, 3) eine gemeinsame Stange (4) aufweisen, welche allen Kolben (2, 3) den gleichen Hub auferlegen.

2. Dosiereinrichtung nach Anspruch 1, dadurch gekennzeichnet, daß sie mit drei, ein Ganzes bildenden Kolben (2, 3, 5) versehen ist, von denen der erste Kolben (2) in Höhe seines Oberendes eine Kammer (8) abgrenzt, die beispielsweise für die Wasserdosierung bestimmt ist, der zweite Kolben (3), dessen Durchmesser größer ist als der des ersten Kolbens, oben eine Kammer (30) abgrenzt, welche vorzugsweise mit der Atmosphäre in Verbindung steht, und unten eine Kammer (9) abgrenzt, die beispielsweise für die Luftdosierung bestimmt ist, und der dritte Kolben (5), dessen Durchmesser beträchtlich kleiner ist als der des ersten Kolbens (2) und der in der Form einer Kolbenstange oder Leitstange (5) ausgeführt ist, in Höhe seines freien Endes eine Kammer (13) begrenzt, welche beispielsweise für die Dosierung der schäumenden Flüssigkeit bestimmt ist.

3. Dosiereinrichtung nach Anspruch 2, dadurch gekennzeichnet, daß die sich über der zweiten Kammer (3) befindliche Kammer (30) mit einer Luftzufuhr- bzw. Luftabfuhrleitung in Verbindung steht.

4. Dosiereinrichtung nach Anspruch 1, dadurch gekennzeichnet, daß sie mit vier, ein Ganzes bildenden Kolben (2, 35, 3, 5) versehen ist, von denen der erste Kolben (2) in Höhe seines Oberendes eine Kammer (8) abgrenzt, die beispielsweise für die Wasserdosierung bestimmt ist, die zweite Kammer (35), deren Durchmesser größer ist als der des ersten Kolbens, oben eine Kammer (37) abgrenzt, an welche eine Luftzufuhr- bzw. eine Luftabfuhrleitung angeschlossen ist, die dritte Kammer (3), deren Durchmesser größer ist als der des zweiten Kolbens, oben eine Kammer (30, welche vorzugsweise mit der Atmosphäre in Verbindung steht, und unten eine Kammer (9) begrenzt, die beispielsweise für die Luftdosierung bestimmt ist, und der vierte Kolben (5), dessen Durchmesser beträchtlich kleiner ist als der des ersten Kolbens (2) und der in der Form einer Kolbenstange oder Leitstange ausgeführt ist, in Höhe seines Unterendes eine Kammer (13) begrenzt, welche beispielsweise für die Dosierung der schäumenden Flüssigkeit bestimmt ist.

5. Dosiereinrichtung nach Anspruch 1, dadurch gekennzeichnet, daß sie mit zwei Kolben (3, 5) versehen ist, von denen der erste Kolben (3) in Höhe seines Oberendes eine Kammer (8), die beispielsweise für die Wasserdosierung bestimmt ist, und in Höhe seines Unterendes eine Kammer (9) abgrenzt, die beispielsweise für die Luftdosierung bestimmt ist, und der zweite Kolben (3), dessen Durchmesser beträchtlich kleiner ist als der des ersten Kolbens (3) ist und der in der Form einer Kolbenstange oder Leitstange (5) ausgeführt ist, in Höhe seines freien Endes eine Kammer (13) begrenzt, welche beispielsweise für die Dosierung der schäumenden Flüssigkeit bestimmt ist.

6. Dosiereinrichtung nach Anspruch 1, dadurch gekennzeichnet, daß die zwei Vorrichtungen mittels der Kolbenstangen (4) und einer Regelstange (52) gemeinsam verbunden sind.

7. Dosiereinrichtung nach irgendeinem der vorhergehenden Ansprüche, dadurch gekennzeichnet, daß die mit Wasserzufuhr und Wasserabfuhr ausgerüstete Kammer (8) über ein Rückschlagventil (16) mit einer Wasserzufuhrleitung (17) und über ein zweites Rückschlagventil (18) mit einer Wasserabfuhrleitung (19) in Verbindung steht.

8. Dosiereinrichtung nach irgendeinem der vorhergehenden Ansprüche, dadurch gekennzeichnet, daß die Kammer (9) für die Luftdosierung mit einer Zufuhrleitung (22) und einer Abfuhrleitung (24) versehen ist, die beide mit einem Ventil (23, 24) ausgerüstet sind.

9. Dosiereinrichtung nach irgendeinem der vorhergehenden Ansprüche, dadurch gekennzeichnet, daß die Kammer (13) für die Dosierung der schäumenden Flüssigkeit mit einer mit einem Rückschlagventil (26) ausgerüsteten Zufuhrleitung (27) und mit einer mit einem Überdruckventil (28) ausgerüsteten Abfuhrleitung (29) versehen ist.

10. Dosiereinrichtung nach Anspruch 1, dadurch gekennzeichnet, daß die Regelvorrichtung die Form eines Nockens (14) hat.

11. Dosiereinrichtung nach Anspruch 1, dadurch gekennzeichnet, daß die Regelvorrichtung die Form eines Druckluftzylinders (32) hat.

12. Dosiereinrichtung nach Anspruch 10, dadurch gekennzeichnet, daß der Nocken (14) mit einer Laufrolle (47) zusammenarbeitet, die auf das freie Ende der genannten Kolben montiert ist, deren Drehachse (48) fest verbunden ist mit einem Hebel (49), der einerseits mit dem zylindrischen Körper (1) gelenkig verbunden ist und andererseits mittels einer Regulierschraube (51) verstellt werden kann.

13. Dosiereinrichtung nach Anspruch 10, dadurch gekennzeichnet, daß der Nocken (14) eine Rille aufweist, mit der eine Laufrolle (47) zusammenarbeitet, die auf das freie Ende der obengenannten Kolben montiert ist.

*Fig.1*

*Fig.2*

# Fig.3

# Fig.4